# FASCICULE DE BREVET EUROPEEN

(11) **EP 3 860 903 B1**
(45) Date de publication et mention de la délivrance du brevet: **23.08.2023**
(21) Numéro de dépôt: 19794603.1
(22) Date de dépôt: 18.09.2019
(51) Int. Cl.: B62D 25/16

(54) **SUPPORT INF AILE AV ASSURANT LA FONCTION D'INTERFACE DE 3 PIÈCES DIFFÉRENTES**
UNTERER VORDERFLÜGELTRÄGER ZUR BEREITSTELLUNG DER FUNKTION DER KOPPLUNG VON 3 VERSCHIEDENEN TEILEN
LOWER FRONT WING SUPPORT PROVIDING THE FUNCTION OF INTERFACING 3 DIFFERENT PARTS

(30) Priorité: 03.10.2018 FR 1871118
(43) Date de publication de la demande: 11.08.2021
(73) Titulaire: PSA Automobiles SA, 78300 Poissy (FR)
(72) Inventeur: MOREAU, Ludovic, 94400 Vitry Sur Seine (FR); SAINT DENIS, Lionel, 92290 CHATENAY MALABRY (FR); RIVIERRE, Laurent, 75015 PARIS (FR)
(86) Numéro de dépôt international: PCT/FR2019/052187
(87) Numéro de publication internationale: WO 2020/070405

(56) Documents cités:
- EP-A1- 1 398 249
- WO-A1-2015/132490
- FR-A1- 2 992 941
- FR-A1- 2 996 503
- FR-A1- 3 058 975

## Description

[L'invention concerne les véhicules automobiles comprenant au moins une aile fixée en sa partie inférieure à la structure du véhicule par un support inférieur d'aile. L'invention concerne également de tels supports inférieurs d'aile,

. Les ailes de véhicules sont des éléments de carrosserie qui sont fixés à la structure du véhicule en différents endroits et notamment en leur partie inférieure. Cette fixation se fait au moyen de pièces de support (ou supports), par exemple assemblées par soudage à un élément de structure. Les supports présentent donc une interface de fixation pour la fixation d'une aile. Dans le cas d'une aile avant de véhicule, la fixation de l'aile sur son support peut se faire par vissage si bien que le support va, par exemple, présenter une interface de fixation avec au moins un ajour pour le passage d'une vis de fixation formant une interface de fixation. Au moins un écrou est avantageusement soudé sur ledit support, de manière à ce que son trou fileté soit aligné avec ledit ajour, pour la retenue d'une vis. Un exemple de support inférieur d'aile selon l'art antérieur est décrit dans le document FR2918342. Dans ce document, le support inférieur d'aile est associé à un raidisseur d'aile.

D'autres éléments du véhicule sont également fixés sur la structure au niveau de l'environnement de l'aile par le biais de de supports dédiés. C'est par exemple le cas des pare-boue, des pièces d'étanchéité ou encore des enjoliveurs d'aile. La multiplication des supports fixés sur les éléments de structure génère une multiplication des coûts engendrés par la nécessité de concevoir, produire et monter ces différents supports. Une solution visant à réduire ces coûts reste à trouver.

Il est connu du document FR2895724 et du document WO 2015/132490 d'utiliser un support d'aile de véhicule pour deux fonctions différentes. Ainsi, il est proposé un support d'aile de véhicule qui intègre un moyen de maintien en position du capot en vue d'au moins un traitement de la structure, Ce support d'aile est disposé en partie supérieure de l'aile, à proximité du capot.. Une zone de rupture permet de séparer le moyen de maintien du reste du support d'aile après la fin des traitements de la structure. Cette solution est intéressante en ce qu'elle permet, de minimiser le nombre de pièces à monter sur le véhicule. Néanmoins, bien qu'étant multifonction, le support ne va, au final, assurer que le support de l'aile.

Le document EP1920998 présente, une carrosserie de véhicule à moteur avec une caisse brute résistante à la peinture et au moins une aile faite d'un matériau qui ne peut pas être peint en même temps que la caisse brute, par exemple une aile en matériau thermoplastique. L'aile est retenue sur la caisse brute par un support d'aile fait en un matériau résistant à la peinture et orientable par rapport à la caisse brute et qui peut être fixé dans une seule position par rapport au support d'aile. Le support d'aile comporte un étrier surmontant un logement de roue et deux bras s'écartant de l'étrier vers le bas de part et d'autre du logement de roue. Le désavantage d'un tel agencement est qu'il implique l'emploi d'un support d'aile de taille relativement importante ce qui implique donc une masse associée relativement importante et qui aurait un avantage à être réduite dans l'objectif d'une diminution globale des émissions de CO₂ du véhicule,

L'invention a pour objectif d'apporter une réponse à au moins un des problèmes et des inconvénients rencontrés dans l'art antérieur. A cet effet, l'invention a pour objectif de proposer un véhicule avec un nombre de pièces réduit.

A cet effet et selon un premier aspect, l'invention propose un véhicule comprenant une aile et un support inférieur d'aile montrant une première interface pour la fixation d'une aile, ledit support étant fixé en partie inférieure d'un élément de structure du véhicule, le véhicule étant remarquable en ce que ledit support inférieur d'aile présente en outre au moins une interface de fixation supplémentaire pour la fixation d'au moins un autre élément du véhicule.

Comme on l'aura compris à la lecture de la définition qui vient d'en être donnée, l'invention propose un support inférieur d'aile multifonction qui va servir d'interface de fixation à au moins un autre élément du véhicule en plus de l'aile du véhicule. Le support d'aile étant fixé en partie inférieure de l'élément de structure du véhicule, son implantation est optimale et sa masse est réduite.

Selon une mise en œuvre préférée de l'invention, l'aile du véhicule est une aile avant, et le support inférieur d'aile est un support inférieur d'aile avant. De préférence, l'élément de structure sur lequel support inférieur d'aile est fixé est un pied avant.

Selon l'invention, le véhicule comprenant un pare-boue, le véhicule est remarquable en ce qu'au moins une interface de fixation supplémentaire du support inférieur d'aile est une interface de fixation d'un pare-boue, de manière à ce que ledit pare-boue soit fixé à l'élément de structure du véhicule par le biais du support inférieur d'aile. De préférence, ladite interface de fixation du pare-boue s'étend selon la direction verticale.

De manière préférentielle, l'interface de fixation d'un pare-boue comprend au moins un ajour dans lequel est retenu un insert en matériau plastique, de sorte à ce que le pare-boue soit fixé par vissage dans ledit insert.

D'une manière plus générale, le véhicule comprenant des moyens de fixation destinés à coopérer avec au moins une interface de fixation supplémentaire pour la fixation d'au moins un autre élément du véhicule, le véhicule est remarquable en ce qu'au moins un des moyens de fixation est un moyen de clippage.

De préférence, le véhicule comprenant un enjoliveur d'aile et le pare-boue étant fixé à l'élément de structure du véhicule par le biais du support inférieur d'aile, le véhicule est en outre remarquable en ce que le pare-boue présente une interface de fixation d'un enjoliveur d'aile, de manière à ce que ledit enjoliveur d'aile soit fixé à l'élément de structure du véhicule par le biais dudit pare-boue. On comprend que dans cette configuration la fixation sur le pare-boue est rendue possible par la rigidification de ce dernier du fait de sa fixation au support inférieur d'aile. L'interface de fixation de l'enjoliveur d'aile est disposée à proximité de l'interface de fixation du pare-boue au support inférieur d'aile. La fixation de l'enjoliveur d'aile au pare-boue est une fixation indirecte au support inférieur d'aile. De préférence, la fixation de l'enjoliveur d'aile se fait par vissage ou par clippage au travers d'un ajour présenté par l'interface de fixation du pare-boue.

Selon un autre mode de réalisation préféré, complémentaire ou alternatif au précédent, le véhicule comprenant une pièce d'étanchéité agencée entre l'élément de structure et l'aile, le véhicule est remarquable en ce qu'au moins une interface de fixation supplémentaire du support inférieur d'aile est une interface de fixation d'une pièce d'étanchéité, de manière à ce que ladite pièce d'étanchéité soit fixée à l'élément de structure du véhicule par le biais du support inférieur d'aile.

De manière préférentielle, l'interface de fixation d'une pièce d'étanchéité comprend au moins un ajour destiné à coopérer avec un moyen de clippage pour la fixation de ladite pièce d'étanchéité.

Selon encore un autre mode de réalisation préféré, complémentaire ou alternatif au précédents, le véhicule comprenant un enjoliveur d'aile, le véhicule est remarquable en ce qu'au moins une interface de fixation supplémentaire du support inférieur d'aile est une interface de fixation d'un enjoliveur d'aile, de manière à ce que ledit enjoliveur d'aile soit fixé à l'élément de structure du véhicule par le biais du support inférieur d'aile.

Selon des caractéristiques de l'invention, le support inférieur d'aile est réalisé d'un seul tenant et/ou en ce que le support inférieur d'aile est réalisé en un matériau métallique ; de préférence en acier.

De manière avantageuse, le support inférieur d'aile comprend un corps présentant deux parois d'accostage à l'élément de structure du véhicule, lesdites parois étant agencées selon des plans non-parallèles. De préférence, lesdites parois d'accostages sont agencées en équerre, l'une perpendiculaire à l'autre. Cette configuration permet de donner au support inférieur d'aile une rigidité plus importante contribuant au support d'une pluralité d'éléments du véhicule en plus de ladite aile.

Idéalement, le support inférieur d'aile comprend au moins deux interfaces de fixation dont une première interface pour la fixation d'une aile ; et au moins une interface de fixation supplémentaire choisie parmi une interface de fixation pour un pare-boue et/ou une interface de fixation d'une pièce d'étanchéité et en ce les au moins deux interfaces de fixation s'étendent selon des plans non-parallèles entre eux. Cette configuration favorise l'accessibilité des différentes interfaces de fixation. De manière alternative ou complémentaire, comprend au moins deux interfaces de fixation dont une première interface pour la fixation d'une aile et une interface de fixation d'un enjoliveur d'aile et la première interface pour la fixation d'une aile et l'interface de fixation d'un enjoliveur d'aile s'étendent selon des plans parallèles entre eux

Avantageusement, le support inférieur d'aile comprenant au moins deux interfaces de fixation supplémentaires, au moins deux interfaces de fixation supplémentaires sont portées par une même patte de fixation. De préférence, ladite patte de fixation forme au moins un coude délimitant deux interfaces de fixation supplémentaires adjacentes. De préférence encore, les au moins deux interfaces de fixation supplémentaires sont choisies parmi une interface de fixation pour un pare-boue, une interface de fixation d'une pièce d'étanchéité et une interface de fixation pour un enjoliveur d'aile.

Selon un deuxième aspect, l'invention concerne un support inférieur d'aile, pour véhicule selon le premier aspect, le support comprenant un corps duquel s'étend une première interface pour la fixation d'une aile, ledit support étant destiné à être fixé en partie inférieure d'un élément de structure du véhicule, le support inférieur d'aile étant caractérisé en ce qu'il présente en outre au moins une interface de fixation supplémentaire pour la fixation d'au moins un autre élément du véhicule. De préférence, il présente en outre
- une interface de fixation pour un pare-boue ; et/ou
- une interface de fixation d'une pièce d'étanchéité ; et/ou
- une interface de fixation d'un enjoliveur d'aile.

L'invention sera bien comprise et d'autres aspects et avantages apparaîtront clairement à la lecture de la description qui suit donnée en référence aux planches de dessins annexées sur lesquelles :
[Fig. 1] présente un support inférieur d'aile selon l'invention.
[Fig. 2] illustre l'agencement d'un support d'aile selon l'invention tel que monté sur un élément de structure du véhicule et sur lequel l'aile de véhicule a été fixée.
[Fig. 3] illustre l'agencement d'un support d'aile selon l'invention selon la figure 2 et sur lequel un pare-boue a été fixé en sa partie inférieure.
[Fig. 4] illustre l'agencement d'un support d'aile selon l'invention selon la figure 3 et sur lequel une pièce d'étanchéité a été fixée, le pare-boue n'est pas représenté pour des raisons de clarté de la figure mais ses moyens de fixation restent illustrés.
[Fig. 5] est une figure analogue à la figure 1 mais montrant une variante de réalisation d'un support inférieur d'aile avec trois interfaces supplémentaires de fixation en plus de la première interface de fixation.

Dans la description qui suit, le terme « comprendre » est synonyme de « inclure » et n'est pas limitatif en ce qu'il autorise la présence d'autres éléments dans le véhicule auquel il se rapporté. Il est entendu que le terme « comprendre » inclut les termes « consister en ». Les termes « inférieur », « supérieur », « avant », « arrière » s'entendront par rapport à l'orientation générale du véhicule. Le terme « inférieur » indiquera une proximité avec le sol plus importante selon la direction verticale que le terme « supérieur ». Le terme « avant » indiquera un positionnement orienté vers le devant d'un véhicule selon la direction horizontale et le terme « arrière » indiquera un positionnement orienté vers l'arrière d'un véhicule selon la même direction. Sur les différentes figures, les mêmes références désignent des éléments identiques ou similaires.

L'invention sera décrite en relation avec son mode de réalisation préféré selon lequel le support inférieur d'aile est un support inférieur d'aile avant d'un véhicule automobile. Le support inférieur d'aile avant du véhicule est monté en partie inférieure d'un élément de structure du véhicule, ici un pied avant de véhicule.

De manière connue, une aile de véhicule est fixée à la caisse du véhicule en plusieurs points. Ces fixations se font par le biais de pièces de support (simplement nommées « support(s) » par la suite) et comprennent une fixation en partie supérieure de l'aile, une fixation avec le côté habitacle et une fixation inférieure. L'aile est généralement fixée en ces différents points par vissage. L'invention s'intéresse particulièrement à la fixation en partie inférieure de l'aile au moyen d'un support inférieur d'aile.

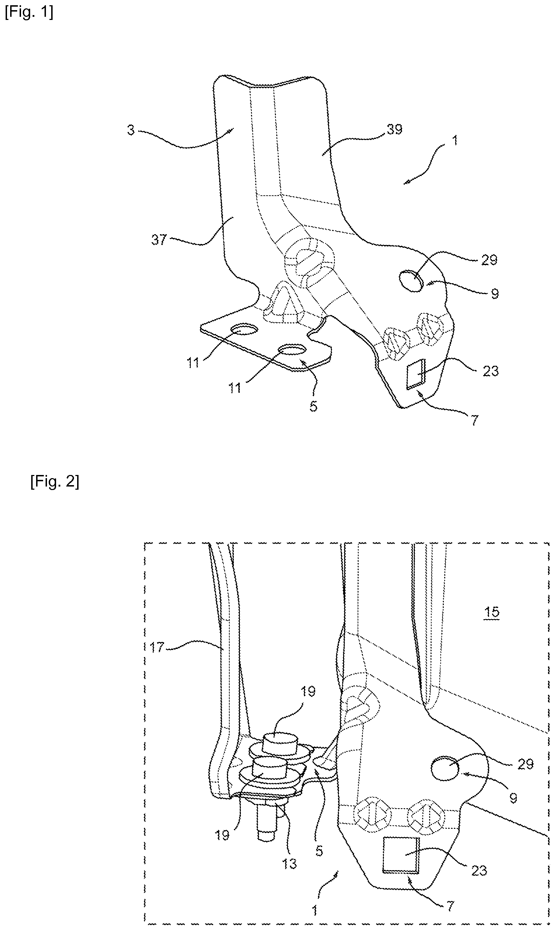

On se référera en premier lieu à la figure 1 représentant un support inférieur 1 d'aile selon l'invention, dans notre exemple de réalisation le support inférieur 1 d'aile est un support inférieur d'aile avant de véhicule. Le support inférieur 1 d'aile comprend un corps 3 destiné à être fixé sur l'élément de structure du véhicule. Selon une mise en oeuvre préféré de l'invention, le corps 3 dudit support est non plan et présente deux parois d'accostage (37, 39) à l'élément de structure du véhicule. De manière avantageuses lesdites parois d'accostage sont agencées selon des plans non-parallèles. De préférence, lesdites parois d'accostage sont agencées en équerre, l'une perpendiculaire à l'autre. Une première paroi 37 s'étend alors selon la direction longitudinale du véhicule et l'autre 39 selon la direction transversale du véhicule. C'est par ces parois (37, 39) d'accostage que le support inférieur d'aile est fixé à l'élément de structure du véhicule, de dernier présente donc une forme complémentaire coopérant avec lesdites parois (37, 39).

Selon un mode de réalisation préféré de l'invention, le support inférieur 1 d'aile est réalisé en un matériau métallique ; par exemple, en acier. Selon un mode de réalisation préféré de l'invention, le support inférieur 1 d'aile est réalisé d'un seul tenant. Par exemple, il est réalisé par emboutissage. Ainsi, le support inférieur 1 d'aile peut être fixé sur l'élément de structure par soudage, par exemple par soudage électrique par point. Néanmoins d'autres moyens de fixation peuvent être envisagés, par exemple par vissage.

De ce corps 3 s'étend donc une première interface 5 de fixation pour la fixation d'une aile. Selon l'invention, ledit support inférieur 1 d'aile présente en outre au moins une interface (7, 9, 41) de fixation supplémentaire pour la fixation d'au moins un autre élément du véhicule. Avantageusement, la première interface de fixation 5 est portée par une patte s'étendant depuis la paroi d'accostage 37 longitudinale et au moins une interface (7, 9, 41) de fixation supplémentaire est portée par une patte s'étendant depuis la paroi d'accostage 39 transversale.

La première interface de fixation 5 se présente donc sous une forme de patte et s'étend selon un plan sensiblement horizontal et donc perpendiculaire au corps 3 dudit support 1. La première interface de fixation 5 comprend avantageusement au moins un ajour 11 pour la fixation de l'aile, par exemple, par vissage. De manière avantageuse, il comprend deux ajours 11. Avantageusement, des écrous 13 (visibles en figure 2) sont soudés à ladite première interface 5 de fixation. D'autres moyens de fixation peuvent néanmoins être envisagés, par exemple des moyens de clippage.

Sur la figure 2, le support inférieur 1 d'aile est fixé sur un élément de structure du véhicule, par exemple, un pied avant 15 de véhicule. L'aile 17 est fixée sur le support inférieur 1 d'aile en sa partie inférieure par le biais de moyens de fixation 19 coopérant avec ladite première interface 5, ici par le biais de vis 19.

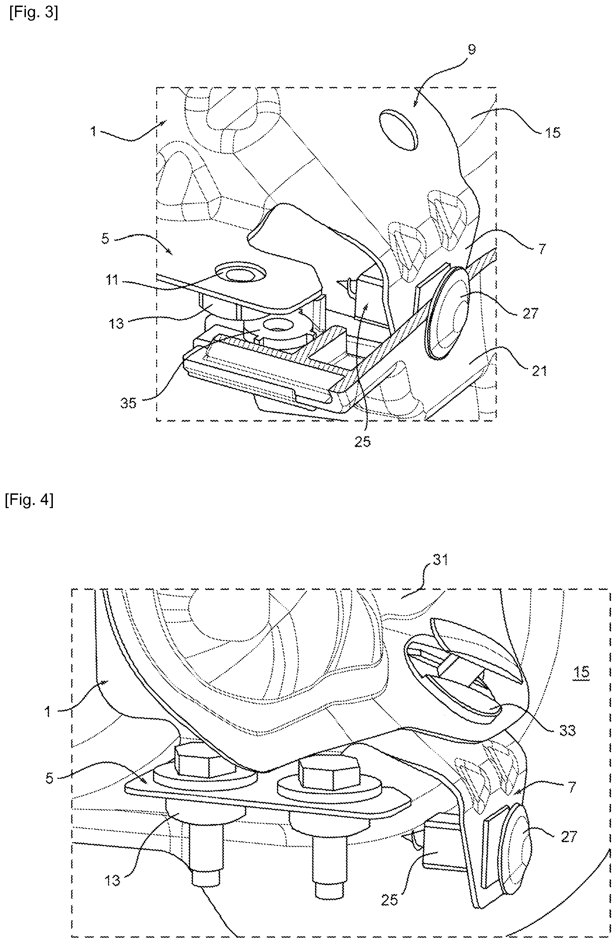

Selon un mode de réalisation préféré illustré en figure 3, le véhicule comprenant un pare-boue 21, le véhicule est remarquable en ce qu'au moins une interface (7, 9) de fixation supplémentaire est une interface 7 de fixation d'un pare-boue. Le support inférieur 1 d'aile présente alors une double fonction de support d'aile 17 et de support de pare-boue 21. Selon une mise en oeuvre préférée de l'invention, ladite interface de fixation 7 du pare-boue se présente sous une forme de patte s'étendant selon la direction verticale et selon un plan sensiblement transversal au véhicule. Ladite interface 7 de fixation d'un pare-boue est agencée pour être écartée du corps principal du support intérieur 1 d'aile. Il est entendu que lorsque le pare-boue 21 est fixé à l'élément de structure 15 du véhicule par le biais du support inférieur 1 d'aile, cette fixation se fait en partie inférieure du pare-boue 21.

De manière préférentielle, la fixation du pare-boue 21 sur le support inférieur 1 d'aile se fait par vissage. Mais d'autres moyens de fixation peuvent être envisagés comme une fixation par clippage par exemple. Aussi de manière préférentielle, l'interface de fixation 7 du pare-boue comprend au moins un ajour 23 pour le passage d'une vis 27 de fixation. Les moyens de retenue de la vis peuvent se présenter sous la forme d'un écrou soudé sur ladite interface de fixation. Néanmoins, selon une mise en oeuvre préférée de l'invention, l'interface de fixation 7 d'un pare-boue comprend au moins un insert 25 en matériau plastique traversant le du un desdits ajours 23 et dans lequel vient se visser au moins une vis 27 de fixation, tel qu'une vis à matériau tendre ou auto-perforante.

Selon un mode de réalisation illustré en figure 3, l'homme du métier tirera avantage de la rigidité relative du pare-boue 21 montrée à proximité de l'interface de fixation dudit pare-boue au support pour fixer encore un autre élément sur ledit élément de structure, tel que par exemple un enjoliveur d'aile (non représenté). A cet effet, le pare-boue (21) présentera avantageusement une interface de fixation 35 d'un enjoliveur d'aile, de manière à ce que ledit enjoliveur d'aile soit fixé à l'élément de structure 15 du véhicule de manière indirecte par le biais dudit pare-boue lui-même fixé sur ledit support inférieur d'aile.

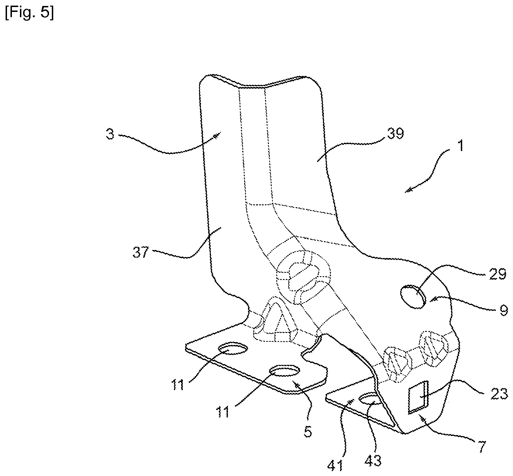

Selon une variante de l'invention illustré en figure 5, le support inférieur 1 d'aile présente une interface de fixation 41 d'un enjoliveur d'aile, de manière à ce que ledit enjoliveur d'aile soit fixé à l'élément de structure 15 du véhicule par le biais du support inférieur 1 d'aile. Ladite interface de fixation présentera à cet effet au moins un ajour 43 pour le passage d'un moyen de fixation. La fixation d'un enjoliveur d'aile peut se faire par tout moyen, par exemple par vissage ou par clippage. La présence d'une interface 41 de fixation d'un enjoliveur d'aile sur le support inférieur 1 d'aile est alternative ou complémentaire avec la présence d'une interface de fixation 35 d'un enjoliveur d'aile sur le pare-boue 21. Les moyens de fixation pouvant en effet coopérer avec à la fois le support inférieur d'aile et le pare-boue pour la fixation de l'enjoliveur d'aile. Eventuellement, l'interface de fixation d'un enjoliveur d'aile et d'un pare-boue sur un support inférieur d'aile sont confondus.

De manière préférentielle, que l'interface de fixation d'un enjoliveur d'aile soit porté par le pare-boue et/ou par le support inférieur d'aile, cette interface s'étend selon un plan horizontal.

Selon un mode de réalisation préféré illustré en figure 3, complémentaire ou alternatif au précédents, le véhicule comprenant une pièce d'étanchéité 31 agencé entre l'élément de structure 15 et l'aile 17, le véhicule est remarquable en ce qu'au moins une interface (7, 9, 41) de fixation supplémentaire du support inférieur 1 d'aile est une interface de fixation 9 d'une pièce d'étanchéité. Le support inférieur 1 d'aile présente alors une double fonction de support d'aile 17 et de support de pièce d'étanchéité 31. Il est entendu que lorsque la pièce d'étanchéité 31 est fixée à l'élément de structure 15 du véhicule par le biais du support inférieur 1 d'aile, cette fixation se fait en partie inférieure de ladite pièce d'étanchéité 31.

Dans un mode de réalisation préféré, le support inférieur 1 d'aile présente une triple fonction de support d'aile 17, de support de pare-boue 21 et de support de pièce d'étanchéité 31. Dans un mode de réalisation préféré, le support inférieur 1 d'aile présente une quadruple fonction de support d'aile 17, de support de pare-boue 21, de support de pièce d'étanchéité 31 et de support d'enjoliveur d'aile.

Selon une mise en oeuvre préférée de l'invention, ladite interface de fixation 9 de la pièce d'étanchéité se présente sous une forme de patte et présente au moins un ajour 29 pour le passage d'un moyen de fixation 33. Le moyen de fixation 33 utilisé pour la fixation de la pièce d'étanchéité 31 est avantageusement un moyen de clippage, tel que par exemple un plasti-rivet. La pièce d'étanchéité 31 est avantageusement une pièce souple en matériau insonorisant.

Comme on l'a vu, le support inférieur 1 d'aile comprend deux interfaces (5, 7, 9, 41) de fixation dont une première interface pour la fixation d'une aile et, selon les besoins, une interface de fixation 7 pour un pare-boue ou une interface 9 de fixation d'une pièce d'étanchéité ; avantageusement, les deux interfaces (5, 7, 9) de fixation s'étendent selon des plans non-parallèles entre eux. De préférence, le support inférieur d'aile comprend trois interfaces (5, 7, 9) de fixation dont une première interface 5 pour la fixation d'une aile 17, une interface de fixation 7 pour un pare-boue 21 et une interface 9 de fixation d'une pièce d'étanchéité 31 ; avantageusement, les trois interfaces de fixation s'étendent selon des plans non-parallèles entre eux. Cette configuration facilite l'accessibilité desdites interfaces (5, 7, 9) pour la fixation des différents éléments sur ledit support inférieur 1 d'aile. Avantageusement, l'interface de fixation d'un enjoliveur d'aile s'étend selon un plan parallèle à la l'interface de fixation de l'aile.

De manière avantageuse, le support inférieur d'aile comprenant trois interfaces (5, 7, 9, 41) de fixation dont une première interface 5 pour la fixation d'une aile 17, une interface de fixation 7 pour un pare-boue 21 et une interface 9 de fixation d'une pièce d'étanchéité 31, l'interface 7 de fixation du pare-boue et l'interface 9 de fixation d'une pièce d'étanchéité sont portées par une même patte de fixation. De préférence ladite patte de fixation forme un coude délimitant les deux interfaces de fixation. Lorsque, comme illustré en figure 5, le support inférieur 1 d'aile comprend une interface de fixation supplémentaire destinée à la fixation d'un enjoliveur d'aile, cette dernière est portée par la même patte de fixation que celle portant l'interface 7 de fixation du pare-boue et/ou l'interface 9 de fixation d'une pièce d'étanchéité.

## Revendications

1. Véhicule comprenant une aile, un pare-boue (21), un enjoliveur d'aile et un support inférieur (1) d'aile montrant une première interface (5) pour la fixation d'une aile (17), ledit support (1) étant fixé en partie inférieure d'un élément de structure (15) du véhicule et présentant au moins une interface (7, 9, 41) de fixation supplémentaire pour la fixation d'au moins un autre élément (21, 31) du véhicule, au moins une interface (7, 9, 41) de fixation supplémentaire du support inférieur (1) d'aile étant une interface de fixation (7) du pare-boue (21), de manière à ce que ledit pare-boue (21) soit fixé à l'élément de structure (15) du véhicule par le biais du support inférieur (1) d'aile, de préférence ladite interface de fixation (7) du pare-boue s'étendant selon la direction verticale, le véhicule étant **caractérisé en ce que** le pare-boue (21) présente une interface de fixation (35) de l'enjoliveur d'aile, de manière à ce que ledit enjoliveur d'aile soit fixé à l'élément de structure (15) du véhicule de manière indirecte par le biais dudit pare-boue (21).

2. Véhicule selon la revendication 1, le véhicule comprenant une pièce d'étanchéité (31) agencée entre l'élément de structure (15) et l'aile (17), le véhicule est **caractérisé en ce qu'**au moins une interface (7, 9, 41) de fixation supplémentaire du support inférieur (1) d'aile est une interface de fixation (9) d'une pièce d'étanchéité, de manière à ce que ladite pièce d'étanchéité (31) soit fixée à l'élément de structure (15) du véhicule par le biais du support inférieur (1) d'aile.

3. Véhicule selon l'une des revendications 1 à 2, le véhicule comprenant un enjoliveur d'aile, le véhicule est **caractérisé en ce qu'**au moins une interface de fixation supplémentaire (7, 9, 41) du support inférieur d'aile est une interface de fixation (41) d'un enjoliveur d'aile, de manière à ce que ledit enjoliveur d'aile soit fixé à l'élément de structure (15) du véhicule par le biais du support inférieur (1) d'aile.

4. Véhicule selon l'une des revendications 1 à 3, le véhicule comprenant des moyens de fixation destinés à coopérer avec au moins une interface (7, 9, 41) de fixation supplémentaire pour la fixation d'au moins un autre élément (21, 31) du véhicule, le véhicule étant **caractérisé en ce qu'**au moins un des moyens de fixation est un moyen de clippage.

5. Véhicule selon l'une des revendications 1 à 4, **caractérisé en ce que** le support inférieur (1) d'aile est réalisé d'un seul tenant et/ou **en ce que** le support inférieur (1) d'aile comprend un corps (3) présentant deux parois d'accostage (37, 39) à l'élément de structure (15) du véhicule, lesdites parois étant agencées selon des plans non-parallèles.

6. Véhicule selon l'une des revendications 1 à 5, **caractérisé en ce que** :
- le support inférieur (1) d'aile comprend au moins deux interfaces (5, 7, 9, 41) de fixation dont une première interface (5) pour la fixation d'une aile (17) ; et au moins une interface (7, 9) de fixation supplémentaire choisie parmi une interface de fixation (7) pour un pare-boue (21) et/ou une interface (9) de fixation d'une pièce d'étanchéité (31) et en ce les au moins deux interfaces (5, 7, 9) de fixation s'étendent selon des plans non-parallèles entre eux ; et/ou
- le support inférieur d'aile comprend au moins deux interfaces (5, 7, 9, 41) de fixation dont une première interface (5) pour la fixation d'une aile (17) et une interface (41) de fixation d'un enjoliveur d'aile et **en ce que** la première interface (5) pour la fixation d'une aile (17) et l'interface (41) de fixation d'un enjoliveur d'aile s'étendent selon des plans parallèles entre eux.

7. Véhicule selon l'une des revendications 1 à 6, **caractérisé en ce que** le support inférieur d'aile comprenant au moins deux interfaces (7, 9, 41) de fixation supplémentaires, et **en ce qu'**au moins deux interfaces (7, 9, 41) de fixation supplémentaires sont portées par une même patte de fixation ; de préférence, ladite patte de fixation forme au moins un coude délimitant deux interfaces de fixation (7, 9, 41) supplémentaires adjacentes.

8. Support inférieur (1) d'aile pour véhicule selon l'une des revendications 1 à 7, le support comprenant un corps (3) duquel s'étend une première interface (5) pour la fixation d'une aile (17), ledit support (1) étant destiné à être fixé en partie inférieure d'un élément de structure (15) du véhicule, le support inférieur (1) d'aile étant **caractérisé en ce qu'**il présente en outre au moins une interface (7, 9, 41) de fixation supplémentaire pour la fixation d'au moins un autre élément (21, 31) du véhicule ; de préférence, il présente en outre
- une interface de fixation (7) pour un pare-boue (21) ; et/ou
- une interface (9) de fixation d'une pièce d'étanchéité (31) ; et/ou
- une interface (41) de fixation d'un enjoliveur d'aile.

9. T
